# EUROPÄISCHE PATENTSCHRIFT

(11) **EP 1 334 013 B1**
(45) Veröffentlichungstag und Bekanntmachung des Hinweises auf die Patenterteilung: **10.08.2005**
(21) Anmeldenummer: 01976314.3
(22) Anmeldetag: 19.10.2001
(51) Int. Cl.: B60R 25/00, B60R 25/04

(54) **TRANSPONDERSCHLÜSSEL FÜR EINE ELEKTRONISCHE WEGFAHRSPERRENFUNKTION**
TRANSPONDER KEY FOR AN ELECTRONIC IMMOBILISER FUNCTION
CLE DE TRANSPONDEUR POUR FONCTION ANTIDEMARRAGE ELECTRONIQUE

(30) Priorität: 15.11.2000 DE 10056573
(43) Veröffentlichungstag der Anmeldung: 13.08.2003
(73) Patentinhaber: Bayerische Motoren Werke Aktiengesellschaft, 80809 München (DE); Hug Hülsbeck & Fürst GmbH & Co. KG, 42551 Velbert (DE)
(72) Erfinder: KALTENBRUNNER, Martin, 84416 Taufkirchen (DE); KEMMANN, Harald, 42555 Velbert (DE)
(86) Internationale Anmeldenummer: PCT/EP2001/012091
(87) Internationale Veröffentlichungsnummer: WO 2002/040325

(56) Entgegenhaltungen:
- EP-A- 0 395 596
- EP-A- 0 811 739
- DE-U- 9 111 651

## Beschreibung

Die Erfindung bezieht sich auf einen Transponderschlüssel für eine elektronische Wegfahrsperrenfunktion nach dem Oberbegriff des Patentanspruchs 1.

Ein derartiger Transponderschlüssel wird bei sehr vielen Fahrzeugen heute zusammen mit einer von den Versicherungen geforderten Wegfahrsperre verwendet. Ein Transponderschlüssel kann beispielsweise ein mechanischer Schlüssel mit integrierter Elektronik zur Codeübertragung oder eine rein elektronische Codekarte sein. Üblicherweise findet bei einer Wegfahrsperrenfunktion zur Deaktivierung der Wegfahrsperre vor Inbetriebnahme des Fahrzeuges ein Codeaustausch zwischen dem Transponderschlüssel und einem kraftfahrzeugintemen Steuergerät statt, um die Authorisierung der Inbetriebnahme zu überprüfen. Die Aktivierung der Wegfahrsperre wird meist nach dem Ausschalten der Zündung vorgenommen. Ein Zyklus der Wegfahrsper renfunkion wird also mit dem Status Deaktivierung begonnen und mit dem Status Aktivierung beendet.

Bei einem Diebstahl müssen der Versicherung alle zugelassenen Schlüssel vorgelegt werden, damit mit hoher Wahrscheinlichkeit ein Diebstahl aufgrund einer fahrlässigen Handhabung der Schlüssel ausgeschlossen werden kann.

Aus der EP 395596 A ist ein gattungsgemäßen Transponderschlüssel für eine elektronische Wegfahrsperrenfunktion eines Fahrzeugs bekannt. Nachdem die elektronische Wegfahrsperre des Fahrzeugs aktiviert worden ist, empfängt der Transponderschlüssel eine Bestätigungsnachricht, die in einem elektronischen Speicher des Transponderschlüssels gespeichert wird und als Nachweis ggü. einer Versicherung dient, dass die Wegfahrsperre zuletzt betätigt worden ist. Wird die Wegfahrsperre mit dem betreffenden Transponderschlüssel nachfolgend außer Funktion gesetzt, wird die gespeicherte Bestätigungsnachricht im Transponderschlüssel gelöscht und durch eine Nachricht der Bestätigung der Aktivierung der Wegfahrsperre ersetzt.

Es ist Aufgabe der Erfindung, eine elektronische Wegfahrsperre eingangs genannter Art im Hinblick auf die Nachweisbarkeit eines Diebstahls trotz jeder Sorgfalt zu verbessern, um den Fahrzeugbesitzer stärker zu unterstützen. Insbesondere bei Fahrzeugen mit einem elektronischen Zugangssystem (Transponderschlüssel) (auch Passive Access genannt, wenn kein mechanischer Schlüssel erforderlich ist) soll die ordnungsgemäße Handhabung/Verriegelung nachgewiesen werden können.

Diese Aufgabe wird durch die Merkmale des Patentanspruchs 1 gelöst.

In einem Transponderschlüssel für eine elektronische Wegfahrsperrenfunktion, die zumindest einen ersten Status in Form der Deaktivierung der Wegfahrsperre und einen zweiten Status in Form einer Aktivierung der Wegfahrsperre aufweisen kann, ist ein erster Speicherbereich vorgesehen, in dem eine Statusinformation abspeicherbar ist, die den jeweils letzten Status anzeigt. Es können auch mehr als zwei Stati vorgesehen sein. Wichtig ist, daß ein Zyklus von Stati vorgesehen ist, der mit dem ersten Status beginnt und mit dem zweiten Status endet.

Wird also ein/der Transponderschlüssel der Versicherung vorgelegt, kann bei Vorliegen des zweiten Status als (letzte) Statusinformation nachgewiesen werden, daß vor dem Diebstahl die Wegfahrsperre ordnungsgemäß aktiviert wurde.

Erfindungsgemäß ist im Transponderschlüssel auch ein zweiter Speicherbereich vorgesehen, in dem eine Zykluszählerinformation abspeicherbar ist, die den Stand eines Zählers anzeigt, der immer dann inkrementiert wird, wenn vom zweiten Status zum ersten Status übergegangen wurde, also wenn ein neuer Zyklus beginnt.

Da einem Fahrzeug üblicherweise mehr als ein Transponderschlüssel zugeordnet sind und die Wegfahrsperre dadurch beispielsweise mit einem ersten Schlüssel deaktiviert und mit einem anderen aktiviert werden kann, kann mittels der Zykluszählerinformation nachgeprüft werden, ob zumindest der Transponder mit dem höchsten Zählerstand den zweiten Status als letzten Status abgespeichert hat.

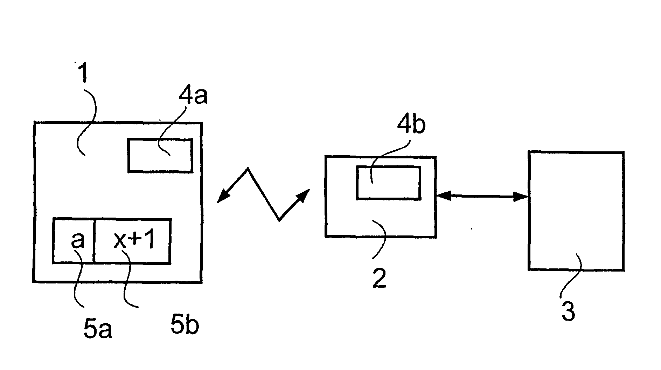

In der Zeichnung ist ein Ausführungsbeispiel der Erfindung dargestellt. Sie zeigt mögliche Komponenten einer Wegfahrsperrenfunktion mit der erfindungsgemäßen Erweiterung des Transponderschlüssels.

Ein Transponderschlüssel 1 kommuniziert beispielsweise über Funk mit einem kraftfahrzeuginternen Wegfahrsperrensteuergerät 2. Das Wegfahrsperrensteuergerät 2 ist beispielsweise über einen Datenbus mit einem Motorsteuergerät 3 zum Betrieb einer Brennkraftmaschine verbunden. Im Transponderschlüssel 1 ist ein Code 4a und im Wegfahrsperrensteuergerät 2 ein Code 4b abgelegt.

Im ff. werden vier Stati definiert:
a erster Status: Deaktivierung der Wegfahrsperre
b dritter Status: Brennkraftmaschine läuft
c vierter Status: Brennkraftmaschine stoppt
d zweiter Status, Aktivierung der Wegfahrsperre

Ein Zyklus lautet: a - b - c - d -

Das Wegfahrsperrensteuergerät 2 vergleicht z. B. den vom Transponderschlüssel 1 übermittelten Code 4a mit dem Code 4b und deaktiviert die Wegfahrsperre durch ein Freigabesignal an das Motorsteuergerät 3, wenn der Code 4a mit dem Code 4b übereinstimmt (Statusinformation: a). Daraufhin nimmt das Motorsteuergerät 3 die Brennkraftmaschine in Betrieb. (Statusinformation: b). Nach einer Fahrt wird beispielsweise vom Fahrer die Zündung ausgeschaltet und die Brennkraftmaschine gestoppt (Statusinformation: c). Beispielsweise nach dem Abziehen des Transponderschlüssels aus dem Zündschloß (wenn vorgesehen) oder nach dem Entfernen des Transponderschlüssels 1 aus der Funkreichweite wird die Wegfahrsperre aktiviert (Statusinformation: d). Der Zyklus ist beendet. Beim nächsten Deaktiviervorgang (Statusinformation: a) wird ein Zähler inkrementiert. Die Zykluszählerinformation X wird also um einen Schritt erhöht X+1.

Nach einem Diebstahl muß zumindest der Transponderschlüssel mit dem höchsten Zählerstand bei einem Vergleich der Zählerstände aller für das Fahrzeug zugelassenen Transponderschlüssel (Zykluszählerinformation: Xₘₐₓ) als Statusinformation d enthalten. Somit kann ein Diebstahl trotz korrekter Aktivierung der Wegfahrsperre insbesondere bei Passive Access Fahrzeugen nachgewiesen werden.

Die Statusinformation (a bis d) und die Zykluszählerinformation (X, X+1 ...) werden vom Wegfahrsperrensteuergerät 2 gebildet. Wichtig ist, daß spätestens nach jedem Aktivieren der Wegfahrsperre beide Informationen in den Speicherbereichen 5a (Statusinformation) und 5b (Zykluszählerinformation) des Transponderschlüssels 1 übertragen werden.

## Patentansprüche

1. Transponderschlüssel (1) für eine elektronische Wegfahrsperrenfunktion, die zumindest einen ersten Status (a) in Form der Deaktivierung der Wegfahrsperre und einen zweiten Status (d) in Form einer Aktivierung der Wegfahrsperre aufweist, und ein erster Speicherbereich (5a) vorgesehen ist, in dem eine Statusinformation (a,b,c oder d) abgespeichert ist, die den jeweils letzten Status anzeigt, **dadurch gekennzeichnet, daß** ein zweiter Speicherbereich (5b) vorgesehen ist, in dem eine Zykluszählerinformation (X, X+1 ...) abgespeichert ist, die den Stand eines Zählers anzeigt, der immer dann inkrementiert wird, wenn vom zweiten Status (d) zum ersten Status (a) übergegangen wird, wobei die Zykluszählerinformation nach Aktivieren der Wegfahrsperre in den zweiten Speicherbereich (5b) übertragen wird.

## Claims

1. A transponder key (1) for an electronic immobiliser function, which has at least a first status (a) in the form of deactivation of the immobiliser and a second status (d) in the form of activation of the immobiliser, and a first memory area (5a) is provided, in which status information (a, b, c or d) is stored, indicating the respective last status, **characterised in that** a second memory area (5b) is provided, in which cycle counter information (X, X+1...) is stored, indicating the reading of a counter that is incremented whenever a transition takes place from the second status (d) to the first status (a), the cycle counter information being transmitted into the second memory area (5b) after activation of the immobiliser.

## Revendications

1. Clé de transpondeur (1) pour une fonction anti-démarrage électronique, qui présente au moins un premier état (a) sous la forme d'une désactivation du système anti-démarrage et un deuxième état (d) sous la forme d'une activation du système anti-démarrage, dans laquelle il est prévu une première zone de mémoire (5a) dans laquelle on enregistre une information d'état (a, b, c, ou d) qui indique le dernier état respectif,
**caractérisée en ce qu'**
il est prévu une deuxième zone de mémoire (5b) dans laquelle on stocke une information de compteur de cycles (X, X+1, ...), qui indique l'état d'un compteur, toujours incrémenté lorsque l'on passe du deuxième état (d) au premier état (a), l'information de compteur de cycles étant transférée dans la deuxième zone de mémoire (5b) après l'activation du système anti-démarrage.
